(19) **Europäisches Patentamt**

**European Patent Office**

**Office européen des brevets**

(11) **EP 0 709 948 B1**

(12) **EUROPEAN PATENT SPECIFICATION**

(45) Date of publication and mention
of the grant of the patent:
**21.08.2002 Bulletin 2002/34**

(51) Int Cl.$^7$: **H02M 3/00**, H02M 3/156

(21) Application number: **94830507.3**

(22) Date of filing: **27.10.1994**

(54) **DC-DC converter functioning in pulse skipping mode under low load conditions**

Gleichstrom-Gleichstromwandler bei niedriger Belastung im Pulsaussetzbetrieb arbeitend

Convertisseur continu-continu fonctionnant en mode d'élimination d'impulsions sous des conditions de charge faible

(84) Designated Contracting States:
**DE FR GB IT**

(43) Date of publication of application:
**01.05.1996 Bulletin 1996/18**

(73) Proprietor: **STMicroelectronics S.r.l.**
**20041 Agrate Brianza (Milano) (IT)**

(72) Inventors:
• **Sandri, Paolo**
**I-20135 Milano (IT)**
• **Borghi, Maria Rosa**
**I-20010 Marcallo con Casone (IT)**
• **Rigazio, Luca**
**I-13043 Cigliano (IT)**

(74) Representative: **Pellegri, Alberto et al**
**c/o Società Italiana Brevetti S.p.A.**
**Piazza Repubblica, 5**
**21100 Varese (IT)**

(56) References cited:
EP-A- 0 583 038 FR-A- 2 610 149
US-A- 4 322 786

## Description

The present invention relates to a static DC-to-DC converter with an improved behaviour in terms of reduction of power consumption under variable load level.

In switching type static converters, the conversion efficiency may be improved by reducing conduction losses in the switch, due to the internal resistance of the switch and proportional to the operation current, and/or the switching losses that depend on the frequency and speed of transitions. Normally, a converter is designed in function of a design level of the switched current under normal conditions of operation, by establishing, case by case, beside the size of the power elements also the switching frequency and a certain normal-operation duty-cycle.

In any case, for relatively high values of the switched current, conduction losses will become predominant while for relatively low current levels (e.g. during idle periods in which the load level of the converter and consequently the duty-cycle are reduced), switching losses become more and more preeminent.

Several techniques are known for reducing the switching frequency of the power switch of the converter when the level of load drops, in order to increase the overall conversion efficiency of the system.

The known solutions may be classified in two distinct groups:

> a) the control circuit of the converter is completely disactivated with the exception of the circuit that manages the turn-off phase, and is reactivated when the output voltage drops below a preset minimum threshold value, to be disactivated again when the output voltage raises above a preset maximum threshold value;
> b) the control system of the power switch of the converter is maintained always active, but the switch is caused to switch by short burst of limited duration, which is established by the time necessary for the output voltage, having dropped below a minimum threshold, to raise again above a certain maximum threshold.

The known solutions of the first kind have the drawback that for example in case of an integrated converter where the power switch (transistor) is also integrated (though not exclusively in such a case), it is necessary to leave active the portion of the control circuit that directly controls the turning on and off of the power transistor. In conclusion, the limited saving that is achieved may be negatively counterbalanced by an increased circuit complexity, in view of the need to introduce dedicated monitoring circuits of the state of internal voltages of the circuit.

The known solutions of the second type, though offering a valid alternative in situations that would exclude the possibility of adopting solutions of the first type, are far from being optimal from the point of view of the power saving, because also during idle phases of operation of the converter, nonnegligeable switching losses persist during burst periods.

In order to reduce the switching losses during phases of operation in a burst mode, several methods have been proposed to reduce the burst frequency. This type of approach is used in the commercial device designated MAX 786 of Maxim Integrated Products, Sunnyvale (CA), U.S.A.. The system employs a comparator for fixing a minimum threshold value of the current that circulates in the inductance of the converter, suitable to command a pulse skipping mode of operation as long as the current through the inductance remains below the minimum threshold value set by the comparator. The system permits to skip many of the pulses of the local oscillator or of the timing clock signal, thus reducing the switching frequency during idle periods of operation. Although reducing switching losses, the system remains ineffective in reducing switching losses also in case when, because of a particularly low input voltage, the slope with which the current through the inductance of the converter raises is so small as to require several clock cycles, at the maximum duty-cycle (limited by the transition from 1 to 0 of the clock signal that is applied to a set input of a driving flip-flop), to reach the minimum threshold value fixed by the comparator. In this case, the switch of the converter nevertheless continues to switch at the maximum duty-cycle, until the current through the inductor reaches the minimum threshold.

An improved method of operation in a skipping pulse mode has now been found, which is capable of optimizing the efficiency of the converter under any condition of operation and in particular also during an idle mode of operation in a pulse skipping mode, in presence of a particularly low input voltage.

Basically, the system of the invention consists in masking the OFF interval of the clock signal that commonly drives a "set" input of a driving flip-flop of the power switch of the converter, as long as the level of the current through the inductor of the converter reaches a minimum threshold established by a comparator.

In practice, the switch of the converter is kept closed (ON) for the whole period of time necessary for the current flowing through the inductor to raise up to the minimum threshold, irrespectively of the number of clock (or local oscillator) cycles to which such a rising process of the current flowing through the inductor up to the minimum threshold corresponds.

This permits to substantially eliminate any undue switching loss during idle periods of operation (that is at a relatively light load level) of the converter, thus overally minimizing the swiching frequency.

The method of the invention may be implemented by employing a first logic gate (for example a NAND gate) capable of receiving at one of its inputs the timing signal from a clock or from a local oscillator circuit and at another input thereof a signal corresponding to a logic sum of the signal produced by the comparator that fixes the minimum current threshold and the driving signal of the switch of the converter and to output a masking signal of the "1" to "0" transition of the timing signal that commonly limits the maximum duty-cycle by being applied to a "set" input of a driving flip-flop. The masking may be implemented by actually driving the switch of the converter through a second gate (for example a second NAND gate), to the inputs of which said masking signal and said driving signal produced at the output of the flip-flop are applied.

The logic sum signal of the output signal of the comparator that fixes the minimum current threshold and of the driving signal, is combined by a logic gate (for example an AND gate) with the signal produced by a PWM control loop, for driving a "reset" input of the flip-flop.

The different aspects and advantages of the invention will become more evident through the following description of a sample embodiment and by referring to the annexed drawings, wherein:

Figure 1 is a partial circuit scheme of a DC-to-DC buck converter (stepdown converter) made according to the present invention;

Figure 2 shows the timing diagrams of the circuit of Fig. 1 under normal operation conditions;

Figure 3 shows a series of timing diagrams and relative waveforms of the voltages of the converter circuit, under idle conditions of operation (i.e. at light load level);

Figure 4 puts into evidence a first idle condition of operation;

Figure 5 puts into evidence a second idle condition of operation;

Figure 6 places in evidence for comparative purposes, a mode of operation of a converter made according to the prior art when functioning in an idle mode similar to the one depicted in the preceding Fig. 5.

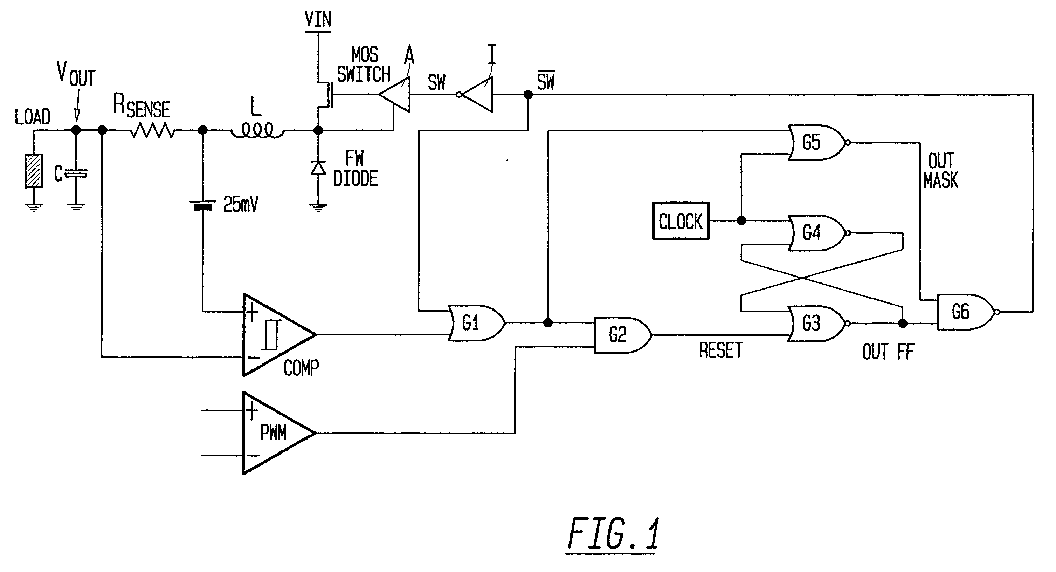

A partial block diagram of a stepdown DC-to-DC converter (commonly known as "buck" converter) controlled in a current mode by a PWM control loop, is depicted in Fig. 1. In order to avoid overburdening the figures, the circuit of the current mode PWM control loop has been omitted from the block diagram of Fig. 1 by schematically representing it by a PWM comparator suitable to output a turn-off signal for the switch of the converter. Of course, the whole PWM control loop will normally comprise an error amplifier and an amplifier of the voltage present across the sensing resistance (Rsens) for monitoring the current that flows through the inductor L of the power circuit of the converter. The power circuit of the converter further comprises a switch, represented in the shown sample by a power MOS transistor (MOS switch), a discharge diode (FW diode) and an output storage capacitor (C).

Of course, a typical PWM control circuit of the state of the power switch of the converter, may also comprise a timing clock circuit (which may be substituted by a local oscillator), a driving flip-flop of the switch of the converter, as represented in the scheme of Fig. 1 by the cross-coupled pair of NOR circuits G4 and G3, as well as the driving buffer stages I and A.

The block diagram of Fig. 1 evicences the elements that implement the method of the invention for minimizing switching losses during an idling phase of operation (idle mode of operation) of the converter. These elements are represented by the offset comparator COMP and by the logic circuits G1, G2, G5 and G6.

Typically, the current mode PWM control system, symbolically represented in the figure by the comparator PWM, outputs a logic signal which normally forces the turning off of the switch of the converter when the signal is at a logic "1" while permitting the turning on of the switch by the clock signal when at a logic "0".

According to a known technique for implementing a so-called skipping pulse mode of operation of the converter during an idle state, a comparator provided with a certain offset, for example of about 25 mV, detects the voltage across the same current sensing resistance Rsens employed by the PWM control loop.

Under normal operation conditions of the converter (that is with a nonnegligeable current absorption by the load), the system functions in the following manner.

Assuming that the output of the comparator COMP be at "1", the logic circuits G2 and G5 are not affected by the signal S1. A "0" to "1" transition of the clock signal "sets" the flip-flop G3/G4, while its reset input node is at "0" (assuming that the PWM loop is in a condition as to permit the turning on of the power transistor that constitutes the switch of the converter).

Nevertheless, the switch will not be closed (on) yet, because through G5 that has its own output at "0", the driving signal SW/ is forced to "1". When masking of the clock signal terminates, that is when the clock signal returns to "0", the output of G5 goes to "1" and the output of "G6" (SW/) goes to "0", thus turning on the power transistor.

Upon the turning on of the power transistor, the voltage across the sensing resistance Rsens increases and at a certain point the PWM control loop will command the turning off of the power transistor through a transistion from "0" to "1" of the output of the PWM comparator.

Upon the return to "0" of the output of the PWM comparator, the switch turns on again at the next transition from "1" to "0" of the clock signal and so forth.

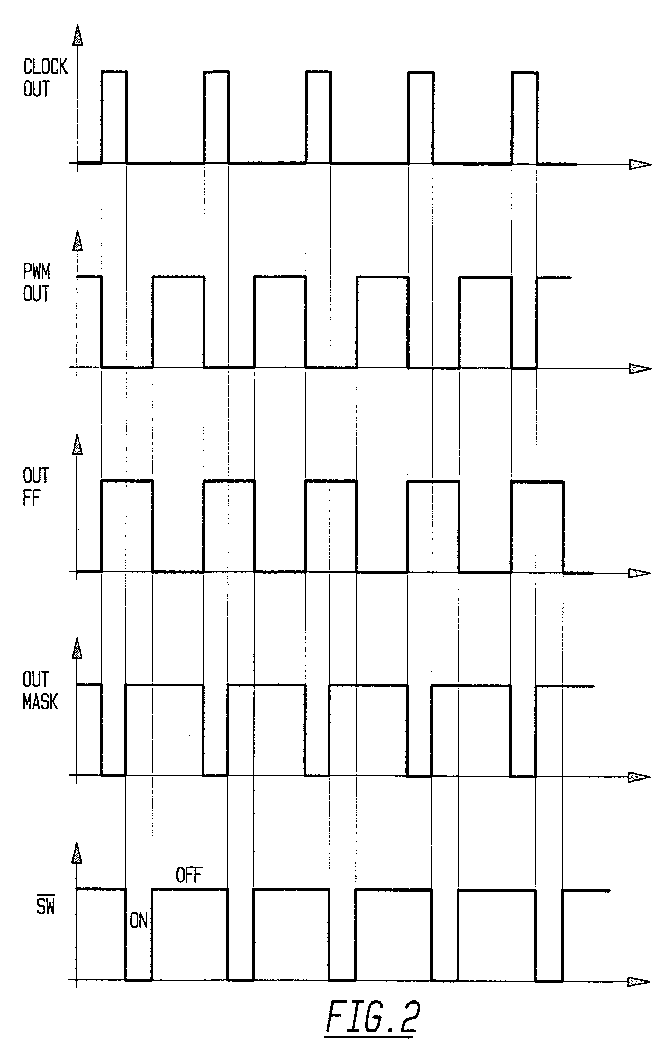

This mode of operation under normal load conditions is represented in Fig. 2 by the relative timing signals.

When, in a low output current condition, the peak value of the current that circulates through the inductor L and therefore through Rsens falls below a certain level determined by a voltage drop lower than 25 mV across the sensing resistance Rsens, the output of the comparator COMP goes to "0".

The circuit of the invention characterized by the logic gates G1, G2, G5 and G6 is such that, when the output of the comparator COMP is at "0", any turn-off command of the power switch by the PWM control loop is inhibited.

The function of the circuit is such that as long as the output of the comparator COMP remains at "0" the following effects are obtained.

The power switch remains ON also if the PWM loop would command to switch it off with a consequent moderate increase of the output voltage beyond the regulation value.

Once the power switch is turned off following a transition of the comparator COMP from "0" to "1", because of the extra energy that has been transferred to the output capacitor C (slight increase of the Vout voltage above the regulation value), the PWM control loop remains with its output node at "1", thus forcing, together with the signal S1 (also at "1") the resetting of the flip-flop. This determines the skipping of a certain number of clock cycles with a net result of a reduction of the overall switching frequency.

As soon as the PWM comparator changes its output state from "1" to "0" (that is Vout > Vrif), the turning on of the power switch is again permitted at the subsequent clock pulse, thus restarting the cycle again.

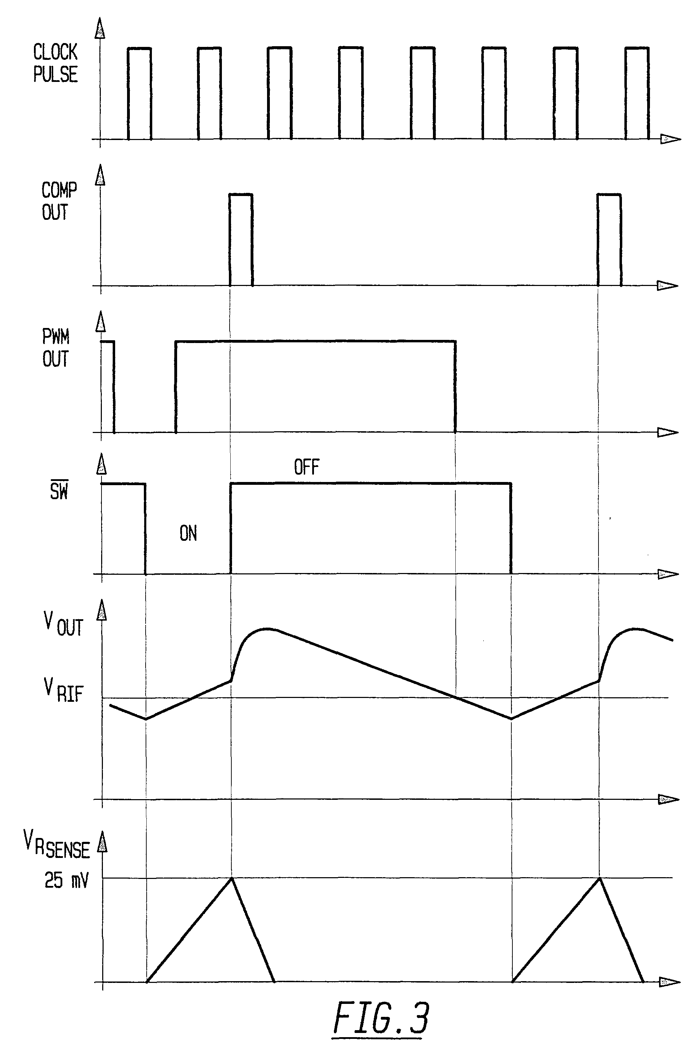

The timing diagrams shown in Fig. 3 show this particular mode of operation. For greater detail, in Fig. 3 are shown also the respective diagrams of the output voltage Vout and of the voltage $V_{Rsens}$ on the sensing resistance .

As may be observed from the timing diagrams of Fig. 3 and from the block diagram of Fig. 1, differently from known control circuits that implement a skipping pulse mode of operation under low current absorption conditions, the control circuit of the invention performs a masking of the OFF period (transition from "1" to "0") of the clock signal, by means of the NAND gate G5. This permits to achieve an operating mode that really minimizes the number of switchings under any condition of operation, thus allowing a great freedom in the choice of the inductance L.

As a matter of fact, two different situations of operation in a skipping pulse mode may be distinguished.

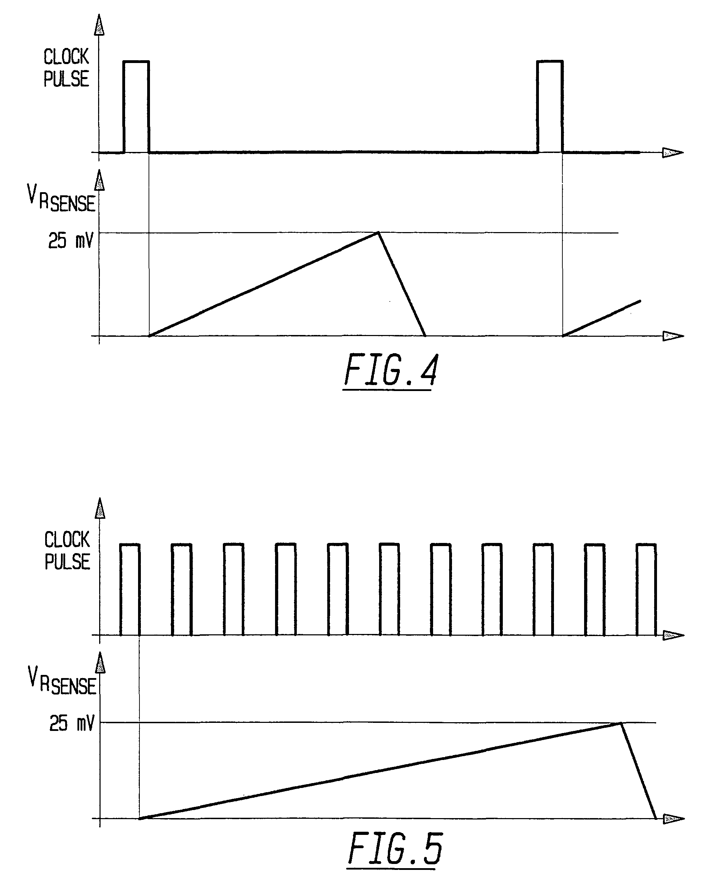

In a first case, qualitatively illustrated by the timing diagrams of Fig. 4, the slope with which the current through the inductor raises, for example in presence of a relatively high input voltage (supply voltage) Vin, is sufficiently steep as to permit the reaching of the minimum current threshold (equivalent to a voltage drop of at least 25 mV across Rsens) withing a clock period.

There are however different situations, wherein either because of the particular value of inductance used and/or because of an excessively low input voltage (Vin), the slope with which the current through the inductor raises is such as to require several clock periods (at the maximum duty-cycle) in order to reach the minimum current threshold (at least 25 mV across Rsens).

Also in this last condition of operation, the circuit of the invention prevents the turning off of the power switch of the converter for as long as such a minimum current threshold is reached.

This is illustratively depicted by the timing diagrams of Fig. 5.

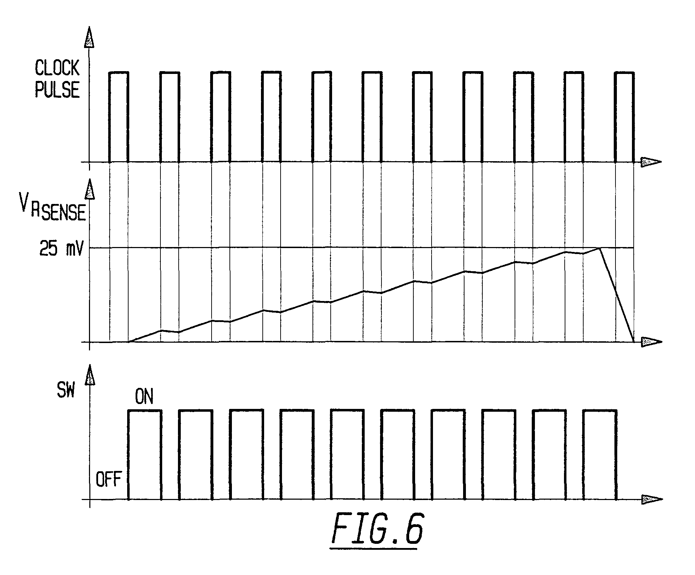

By contrast, in known systems, wherein the masking of the clock signal that forces the turning off of the power switch at the allowed maximum duty-cycle is "permanently" active, a plurality of switchings of the power switch, accompanied by relative switching losses, occur nevertheless. For comparison reasons, the operation diagrams of known systems are shown in Fig. 6.

It is evident how the circuit of the invention attains a total optimization by eliminating unnecessary multiple switchings. This is achieved by inhibiting the turning off of the power switch of the converter for as long as the current through the inductor reaches a minimum threshold value determined by the offset of the comparator COMP. In practice, the overall switching frequency is effectively minimized also under conditions of no current absorption by the load of the converter (idle mode) to the advantage of the overall conversion efficiency of the converter.

**Claims**

1. A method for reducing switching losses during idle periods in a DC-to-DC converter comprising an inductor (L), a switch (MOS SWITCH) and a current mode PWM control loop (PWM) suitable to control the duty cycle of said switch (MOS SWITCH) by commanding the turning OFF in function of the current level in said inductor (L) and of the output voltage of said converter, the method comprising the step of fixing a certain minimum threshold value of the current flowing through said inductor (L) below which the overall switching frequency is reduced, **characterised by**
   inhibiting any intervening turn-off command (OUT MASK) of said switch (MOS SWITCH) by the PWM control loop (PWM) as long as the current through said inductor (L) remains below said minimum threshold value.

2. A method as defined in claim 1, wherein said inhibiting is implemented by masking the switching to a logic "0" of a high frequency timing signal (CLOCK) of the converter for the entire period of time said current remains below said minimum threshold value.

**3.** A DC-to-DC static converter composed of a power section which comprises at least a switch (MOS SWITCH) driven at a switching frequency set by a clock or local oscillator signal (CLOCK), an inductor (L), a discharge diode (FW DIODE), an output storage capacitor (C), a PWM control loop (PWM) suitable to control the duty-cycle of said switch (MOS SWITCH) by commanding the turning off in function of the current level in the inductor (L) and of the output voltage ($V_{OUT}$) of the converter, and a control circuit (COMP, G1, G2, G5, G6) for reducing the overall switching frequency during idle periods as long as the current in the inductor (L) remains below a minimum threshold value set by a comparator (COMP), **characterized by** comprising

logic means (G1, G2, G5, G6) capable of inhibiting any turn-off command by said PWM control loop (PWM) of said switch (MOS SWITCH) of the converter for as long as the current in the inductor (L) remains below said minimum threshold value.

**4.** A converter as defined in claim 3, wherein said logic means mask the transition to "0" of said clock or local oscillator signal (CLOCK).

**5.** A static DC-to-DC converter according to claim 3 wherein said output storage capacitor (C) is charged by the discharge current of said inductor and said PWM control loop (PWM) comprises an error amplifier and a comparator for controlling the duty-cycle of said switch in function of the current in the inductor as detected on a sensing resistance ($R_{SENSE}$) and the output voltage ($V_{OUT}$) on said storage capacitor (C), a flip-flop (G3, G4) driving said switch and having a "set" input coupled to said timing signal (CLOCK) and a reset input coupled to a control signal produced by said PWM control loop (PWM), at least a second comparator (COMP), the inputs of which are functionally connected to said sensing resistance ($R_{SENSE}$), **characterized by** the fact that such logic means comprise :

a first OR logic circuit (G1) having a first input connected to the output of said second comparator (COMP), a second input to which a drive signal ($\overline{SW}$) of said switch is applied and an output;

a second AND logic circuit (G2) having a first input connected to the output of said first OR logic circuit (G1), a second input connected to an output of said PWM control loop (PWM) and an output connected to said reset input (RESET) of said driving flip-flop (G3, G4);

a third NAND logic circuit (G5) having a first input connected to the output of said first OR logic circuit (G1), a second input connected to said set input of said flip-flop and an output;

a fourth NAND logic circuit (G6) having an input connected to an output (OUT FF) of said flip-flop, a second input connected to the output of said third NAND logic circuit (G5) and generating a drive signal ($\overline{SW}$) of said switch.

**Patentansprüche**

**1.** Verfahren zur Verringerung des Schaltungsverlustes während der Leerperioden in einem Gleichstrom zu Gleichstrom Umformer, der eine Drosselspule (L), einen Schalter (MOS SWITCH) und einen in Strom-Modalität arbeitenden Steuerkreis (PWM), der in der Lage ist den Arbeitskreislauf des genannten Schalters (MOS SWITCH) dadurch anzusteuern, dass er einen Ausschaltungsbefehl in Abhängigkeit von dem Strompegel in der genannten Drosselspule (L) und der vom genannten Umformer abgegebenen Spannung abgibt umfasst, wobei das Verfahren den Schritt der Festlegung eines bestimmten mindesten Schwellwertes des Stromes, der durch die genannte Drosselspule (L) fließt, unterhalb welches die gesamte Schaltungsfrequenz verringert wird umfasst, **gekennzeichnet durch** Sperrung jedes beliebigen dazwischenkommenden, **durch** den PWM Steuerkreis (PWM) ausgelösten Löschbefehls (OUT MASK) des genannten Schalters (MOS SWITCH) solange der Strom **durch** die genannte Drosselspule (L) unterhalb des genannten mindesten Schwellwertes bleibt.

**2.** Verfahren wie in Anspruch 1 dargelegt, wobei die genannte Sperrung durch Maskieren der Schaltung nach einem logischen "0" eines hochfrequenten Synchronisiersignals (CLOCK) des Umformers während der ganzen Zeitspanne in der der genannte Strom unterhalb des genannten mindesten Schwellwertes bleibt bewirkt wird.

**3.** Statischer Gleichstrom zu Gleichstrom Umformer, bestehend aus einem Leistungsabschnitt, der mindestens einen mit einer durch einen Taktgeber bzw. ein lokales Schwingersignal (CLOCK) festgestellte Schaltungsfrequenz gesteuerten Schalter (MOS SWITCH), einer Entladediode (FW DIODE), einem Ausgabenspeicherkondensator (C), einem PWM Steuerkreis (PWM), der dadurch den Arbeitszyklus des genannten Schalters (MOS SWITCH) anzusteuern in der Lage ist, dass er das Auslöschen in Abhängigkeit des Strompegels in der Drosselspule (L) und der Ausgabespannung ($V_{OUT}$) des Umformers steuert, und einem Steuerkreis (COMP, G1, G2, G5, G6) zur Verringerung der gesamten Schaltungsfrequenz während der Leerperioden, solange der Strom in der Drosselspule (L) unterhalb eines mindesten durch einen Komparator (COMP) festgestellten Schwellwertes bleibt, **dadurch gekennzeichnet,dass** er logische Mittel (G1, G2, G5, G6), die in der Lage sind jeden beliebigen, durch den PWM Steuerkreis (PWM) ausgelösten Löschbefehl des genannten Schalters (MOS SWITCH) des Umformers solange der durch die genannte Drosselspule (L) fließende Strom unterhalb des genannten mindesten Schwellwertes bleibt zu sperren umfasst.

4. Umformer wie in Anspruch 1 dargelegt, wobei die genannte logische Mittel den Übergang nach "0" des genannten Taktgebers bzw. lokalen Schwingersignals (CLOCK) maskieren.

5. Statischer Gleichstrom zu Gleichstrom Umformer nach Anspruch 3, wobei der genannte Ausgabenspeicherkondensator (C) durch den Entladungsstrom der genannten Drosselspule aufgeladen wird, und der genannte PWM Steuerkreis (PWM) einen Fehlerverstärker und einen Komparator zur Steuerung des Arbeitszyklus des genannten Schalters in Abhängigkeit des durch die Drosselspule (L) fließenden Stromes, wie er an einem Fühlungswiderstand ($R_{SENSE}$) detektiert wird, und der Ausgabespannung ($V_{OUT}$) am genannten Speicherkondensator (C), eine Kippschaltung (G3, G4), die den genannten Schalter steuert und einen "Set" Eingang, der mit dem genannten Synchronisiersignal (CLOCK) gekoppelt ist, und einen "Reset" Eingang, der mit einem durch den genannten PWM Steuerkreis (PWM) erstellte Steuersignal gekoppelt ist aufweist, mindestens einen zweiten Komparator (COMP) dessen Eingänge mit dem genannten Fühlungswiderstand ($R_{SENSE}$) wirkgekoppelt sind umfasst, **dadurch gekennzeichnet, dass** die genannte logische Mittel

eine erste logische OR-Schaltung (G1), die einen ersten mit dem Ausgang des genannten zweiten Komparators (COMP) gekoppelten Eingang, einen zweiten Eingang an dem ein Steuersignal ($\overline{SW}$) des genannten Schalters angelegt ist, und einen Ausgang aufweist;

eine zweite logische AND-Schaltung (G2), die einen ersten mit dem Ausgang des genannten ersten logischen OR-Schaltung (G1) gekoppelten Eingang, einen zweiten mit einem Ausgang des genannten PWM Steuerkreises (PWM) gekoppelten Eingang, und einen mit dem genannten Reset-Eingang (RESET) der genannten Steuerkippschaltung (G3, G4) gekoppelten Ausgang aufweist;

eine dritte logische NAND-Schaltung (G5), die einen ersten mit dem Ausgang der genannten ersten logischen OR-Schaltung (G1) gekoppelten Eingang, einen zweiten mit dem genannten Set-Eingang der genannten Kippschaltung gekoppelten Eingang, und einen Ausgang aufweist;

eine vierte logische NAND-Schaltung (G6), die einen mit einem Ausgang (OUT FF) der genannten Kippschaltung gekoppelten Eingang, einen zweiten mit dem Ausgang der genannten dritten logischen NAND-Schaltung (G5) gekoppelten Eingang aufweist und ein Steuersignal ($\overline{SW}$) des genannten Schalters erzeugt umfassen.

## Revendications

1. Une méthode pour réduire les pertes de commutation pendant les périodes de basse absorption dans un convertisseur de CC à CC comprenant un inducteur (L), un interrupteur (MOS SWITCH) et un anneau de contrôle PWM en modalité courant (PWM) qui est adapté pour contrôler le cycle de travail dudit interrupteur (MOS SWITCH) en commandant l'extinction en fonction du niveau du courant dans ledit inducteur (L) et de la tension en sortie dudit convertisseur, la méthode comprenant l'étape de fixer une certaine valeur minimale de seuil du courant qui passe par ledit inducteur (L) au dessous de laquelle la fréquence globale de commutation est réduite, **caractérisée en ce que** toute commande d'extinction (OUT MASK) survenant dudit interrupteur (MOS SWITCH), introduite par l'anneau de contrôle PWM (PWM), est inhibée jusqu'à ce que le courant qui passe par l'inducteur (L) reste au dessous de ladite valeur minimale de seuil.

2. Une méthode, telle qu'elle est définie dans la revendication 1, dans laquelle ladite inhibition est opérée en masquant la commutation vers un "0" logique d'un signal de synchronisation à haute fréquence (CLOCK) du convertisseur pour toute la période de temps pendant laquelle ledit courant reste au dessous de ladite valeur minimale de seuil.

3. Un convertisseur de CC à CC statique composé d'une section de puissance qui comprend au moins un interrupteur (MOS SWITCH) piloté par une fréquence de commutation établie par une horloge ou un signal d'oscillateur local (CLOCK), un inducteur (L), une diode de décharge (FW DIODE), un condensateur accumulateur de sortie (C), un anneau de contrôle PWM (PWM) qui est adapté pour contrôler le cycle de travail dudit interrupteur (MOS SWITCH) en commandant l'extinction en fonction du niveau du courant dans ledit inducteur (L) et de la tension en sortie du convertisseur ($V_{OUT}$), et un circuit de contrôle (COMP, G1, G2, G5, G6) pour réduire la fréquence de commutation globale pendant les périodes de basse absorption jusqu'à ce que le courant dans l'inducteur (L) reste au dessous d'une valeur minimale de seuil établie par un comparateur (COMP), **caractérisé en ce qu'**il comprend

des moyens logiques (G1, G2, G5, G6) qui sont en mesure d'inhiber toute commande d'extinction dudit interrupteur (MOS SWITCH) du convertisseur par ledit anneau de contrôle PWM (PWM) jusqu'à ce que le courant dans l'inducteur (L) reste au dessous de ladite valeur minimale de seuil.

**4.** Un convertisseur tel qu'il est défini dans la revendication 3, dans lequel lesdits moyens logiques masquent la transition vers "0" dudit horloge ou signal d'oscillateur local (CLOCK).

**5.** Un convertisseur de CC à CC statique selon la revendication 3, dans lequel ledit condensateur de stockage de sortie (C) est chargé par le courant de décharge dudit inducteur, et ledit anneau de contrôle PWM (PWM) comprend un amplificateur d'erreur et un comparateur pour contrôler le cycle de travail dudit interrupteur en fonction du courant dans l'inducteur tel qu'il est détecté sur une résistance de détection ($R_{SENSE}$) et de la tension en sortie ($V_{OUT}$) sur ledit condensateur de stockage de sortie (C), un multivibrateur bistable (G3, G4) qui pilote ledit interrupteur et ayant une entrée "set" couplée audit signal de synchronisation (CLOCK) et une entrée "reset" couplée à un signal de contrôle produit par ledit anneau de contrôle PWM (PWM), au moins un deuxième comparateur (COMP) les entrées duquel sont fonctionnellement connectées à ladite résistance de détection ($R_{SENSE}$), **caractérisé en ce que** lesdits moyens logiques comprennent:

un premier circuit logique OU (G1) ayant une première entrée connectée à la sortie dudit deuxième comparateur (COMP), une deuxième entrée à laquelle on applique un signal de pilotage ($\overline{SW}$) dudit interrupteur, et une sortie;

un deuxième circuit logique ET (G2) ayant une première entrée connectée à la sortie dudit premier circuit logique OU (G1), une deuxième entrée connectée à une sortie dudit anneau de contrôle PWM (PWM), et une sortie connectée à ladite entrée de reset (RESET) dudit multivibrateur bistable de pilotage (G3, G4);

un troisième circuit logique NET (G5) ayant une première entrée connectée à la sortie dudit premier circuit logique OU (G1), une deuxième entrée connectée à ladite entrée de "set" dudit multivibrateur bistable et une sortie;

un quatrième circuit logique NON-ET (G6) ayant une entrée connectée à une sortie (OUT FF) dudit multivibrateur bistable, et une deuxième entrée connectée à la sortie dudit troisième circuit logique NET (G5) et générant un signal de pilotage ($\overline{SW}$) dudit interrupteur.

FIG.1

EP 0 709 948 B1

FIG.2

_FIG.3_

CLOCK
PULSE

$V_{R_{SENSE}}$

25 mV

<u>FIG.4</u>

CLOCK
PULSE

$V_{R_{SENSE}}$

25 mV

<u>FIG.5</u>

FIG.6